# EUROPEAN PATENT APPLICATION

(11) **EP 4 617 164 A1**
(43) Date of publication of application: **17.09.2025**
(21) Application number: 22968790.0
(22) Date of filing: 19.12.2022
(51) Int. Cl.: B63H 21/20

(54) **METHOD FOR GENERATING SHIP POWER AND SHIP**

(71) Applicant: Contemporary Amperex Technology (Hong Kong) Limited, Hong Kong (HK)
(72) Inventor: ZHAO, Jiangfeng, Ningde City, Fujian 352100 (CN); HU, Xiaoyan, Ningde City, Fujian 352100 (CN); HU, Jianguo, Ningde City, Fujian 352100 (CN)
(74) Representative: Gong, Jinping
(86) International application number: PCT/CN2022/140023
(87) International publication number: WO 2024/130486

(57) **Abstract**

Embodiments of this application provide a method for generating ship propulsion and a ship, so as to provide ship propulsion that is both safe and reliable while achieving low pollutant emissions. The method for generating ship propulsion includes: converting urea stored in a ship into a hydrogen-containing combustible substance; and utilizing chemical energy of the hydrogen-containing combustible substance to generate propulsion for driving the ship. With the technical solutions of the embodiments of this application, urea, as a safe, stable, easy-to-produce, and low-cost raw material, can be stably and reliably transported and stored in the ship, ensuring the stable driving and voyage safety of the ship. In addition, the hydrogen-containing combustible substance formed from the conversion of urea does not include sulfur element, which can effectively reduce pollutants such as sulfur oxides generated during the driving of the ship, meeting low pollutant emission requirements of the ship.

## Description

### TECHNICAL FIELD

Embodiments of this application relate to the field of ship, and more specifically, to a method for generating ship propulsion and a ship.

### BACKGROUND

With the continuous development of ship propulsion system technology and the successful research and development of its core products, domestic and international ship propulsion systems are currently developing towards greening. Safety, reliability, and low pollutant emissions are typical requirements for green ship propulsion systems.

To meet these demands, how to provide ship propulsion that is both safe and reliable while achieving low pollutant emissions is a technical issue that urgently needs to be addressed in ship technology.

### SUMMARY

Embodiments of this application provide a method for generating ship propulsion and a ship, so as to provide ship propulsion that is both safe and reliable while achieving low pollutant emissions.

According to a first aspect, a method for generating ship propulsion is provided, including: converting urea stored in a ship into a hydrogen-containing combustible substance; and utilizing chemical energy of the hydrogen-containing combustible substance to generate propulsion for driving the ship.

With the technical solutions of the embodiments of this application, urea, as a safe, stable, easy-to-produce, and low-cost raw material, can be stably and reliably transported and stored in the ship, ensuring the stable driving and voyage safety of the ship. In addition, the hydrogen-containing combustible substance formed from the conversion of urea does not include sulfur element, which can effectively reduce pollutants such as sulfur oxides generated during the driving of the ship, meeting low pollutant emission requirements of the ship.

In some possible implementations, the hydrogen-containing combustible substance includes ammonia and/or hydrogen.

With the technical solutions of the embodiments of this application, the ammonia and hydrogen obtained from the conversion of urea are not only combustible, making it easy to convert chemical energy into other forms of energy, but also can be used as low-emission or even zero-emission fuels, greatly reducing the pollutant emissions of the ship propulsion system.

In some possible implementations, the utilizing chemical energy of the hydrogen-containing combustible substance to generate propulsion for driving the ship includes: converting the chemical energy of the hydrogen-containing combustible substance into thermal energy; converting the thermal energy into electrical energy; and utilizing the electrical energy to charge a power battery of the ship, the power battery being configured to provide propulsion for the ship.

With the technical solutions of the embodiments of this application, after the urea stored in the ship is converted into a hydrogen-containing combustible substance, the chemical energy of the hydrogen-containing combustible substance can be converted into electrical energy, thereby implementing the charging of the power battery of the ship. The power battery can provide controllable and stable output power to the ship, which can stably and reliably meet the navigation requirements of the ship. In addition, the power battery can also assist other propulsion sources of the ship to comprehensively ensure normal voyage of the ship.

In some possible implementations, the utilizing the electrical energy to charge a power battery of the ship includes controlling an output power of the electrical energy based on a state parameter of the power battery to control a charging speed at which the power battery is charged.

In the embodiments of this application, the output power of the electrical energy for charging the power battery may be adjusted in real-time based on a state parameter of the power battery, thereby adjusting the charging speed of the power battery to comprehensively ensure the charging efficiency and safety of the power battery.

In some possible implementations, the controlling an output power of the electrical energy based on a state parameter of the power battery includes: controlling the output power of the electrical energy to be a first power in a case that a state of charge SOC of the power battery is greater than a first preset value; and controlling the output power of the electrical energy to be a second power in a case that the SOC of the power battery is less than or equal to the first preset value; where the first power is less than the second power.

In the embodiments, the SOC of the power battery can be directly used to characterize the remaining power capacity of the power battery. When the SOC of the power battery is high, the remaining power capacity of the power battery is sufficient, and an output power of the electrical energy from a generator can be reduced to lower the charging rate of the power battery, preventing overcharging of the power battery due to excessive charging speed. Correspondingly, when the SOC of the power battery is low, the remaining power capacity of the power battery is insufficient, and the output power of the electrical energy from the generator can be increased to increase the charging rate of the power battery, so that the power capacity of the power battery can be quickly increased, ensuring a stable supply of ship propulsion.

In some possible implementations, the controlling an output power of the electrical energy based on a state parameter of the power battery includes controlling the hydrogen-containing combustible substance and/or the urea based on the state parameter of the power battery to control the output power of the electrical energy.

With the technical solutions of the embodiments of this application, when the state parameter of the power battery changes, the adjustment of the urea and/or the hydrogen-containing combustible substance in the system can not only adjust the charging rate of the power battery, ensuring the charging performance of the power battery, but also control and save the use of urea on the ship, so as to save the space on the ship for urea storage, or extend the mileage that the ship can travel with the available urea.

In some possible implementations, the controlling an output power of the electrical energy based on a state parameter of the power battery includes controlling, based on the state parameter of the power battery, an amount of the chemical energy of the hydrogen-containing combustible substance to be converted into the thermal energy and/or an amount of the thermal energy to be converted into the electrical energy to control the output power of the electrical energy.

With the technical solutions of the embodiments of this application, when the state parameter of the power battery changes, the adjustment of the amount of conversion between various forms of energy in the system can achieve the adjustment of the output power of the electrical energy to adjust the charging rate of the power battery. This technical solution is conducive to improving the adjustment accuracy of the output power of the electrical energy, thereby further ensuring the charging performance of the power battery.

In some possible implementations, the method further includes: converting the thermal energy into mechanical energy; and utilizing the mechanical energy to generate first propulsion for driving the ship, the power battery being configured to generate second propulsion for the ship.

With the technical solutions of the embodiments of this application, the urea stored in the ship can provide two forms of propulsion to the ship. These two forms of propulsion can assist and complement each other. When one form of propuls ion encounters an abnormality or failure, the other can continue to be used to ensure the voyage needs of the ship.

In some possible implementations, the converting the thermal energy into mechanical energy and converting the thermal energy into electrical energy include controlling, based on the state parameter of the power battery, an amount of the thermal energy to be converted into the mechanical energy and an amount of the thermal energy to be converted into the electrical energy.

In the embodiments of this application, the amount of thermal energy to be converted into mechanical energy and the amount of thermal energy to be converted into electrical energy may be adjusted in real-time based on the state parameter of the power battery. The charging speed of the power battery may be adjusted based on the state parameter of the power battery to ensure the charging efficiency and safety of the power battery. In addition, the thermal energy of the hydrogen-containing combustible substance can be fully utilized to adjust the output of the first propulsion and the second propulsion, comprehensively ensuring the voyage needs of the ship.

In some possible implementations, the controlling, based on the state parameter of the power battery, an amount of the thermal energy to be converted into the mechanical energy and an amount of the thermal energy to be converted into the electrical energy includes: controlling conversion of a first part of the thermal energy into mechanical energy and conversion of a second part of the thermal energy into electrical energy in a case that the SOC of the power battery is greater than a second preset value; and controlling conversion of a third part of the thermal energy into mechanical energy and conversion of a fourth part of the thermal energy into electrical energy in a case that the SOC of the power battery is less than or equal to the second preset value; where energy of the first part of the thermal energy is greater than energy of the second part of the thermal energy, and energy of the third part of the thermal energy is less than energy of the fourth part of the thermal energy.

With the technical solutions of the embodiments, the SOC of the power battery is used to control the conversion of thermal energy into mechanical energy and the conversion of thermal energy into electrical energy. The implementation is simple and highly reliable, ensuring the charging safety and charging speed of the power battery and providing the reliable adjustment of the output of the first propulsion and the second propulsion, comprehensively ensuring the voyage needs of the ship.

In some possible implementations, the converting the thermal energy into mechanical energy and converting the thermal energy into electrical energy include: controlling a first part of the hydrogen-containing combustible substance and/or a first part of the urea based on the state parameter of the power battery; converting thermal energy corresponding to the first part of the hydrogen-containing combustible substance and/or the first part of the urea into mechanical energy; controlling a second part of the hydrogen-containing combustible substance and/or a second part of the urea based on the state parameter of the power battery; and converting thermal energy corresponding to the second part of the hydrogen-containing combustible substance and/or the second part of the urea into electrical energy.

With the technical solutions of the embodiments of this application, when the state parameter of the power battery changes, the two parts of urea and/or the two parts of the hydrogen-containing combustible substance in the system may be adjusted to control the mechanical energy for generating the first propulsion and the electrical energy for charging the power battery, effectively ensuring the charging safety and charging speed of the power battery and providing the reliable adjustment of the output of the first propulsion and the second propulsion, comprehensively ensuring the voyage needs of the ship.

In some possible implementations, the controlling a first part of the hydrogen-containing combustible substance based on the state parameter of the power battery and controlling a second part of the hydrogen-containing combustible substance based on the state parameter of the power battery includes: controlling the first part of the hydrogen-containing combustible substance to be a first magnitude value and the second part of the hydrogen-containing combustible substance to be a second magnitude value in a case that the SOC of the power battery is greater than a third preset value; and controlling the first part of the hydrogen-containing combustible substance to be a third magnitude value and the second part of the hydrogen-containing combustible substance to be a fourth magnitude value in a case that the SOC of the power battery is less than or equal to the third preset value; where the first magnitude value is greater than the second magnitude value, and the third magnitude value is less than the fourth magnitude value.

With the technical solutions of the embodiments, the SOC of the power battery is used to control the magnitude values of the two parts of urea and/or the two parts of the hydrogen-containing combustible substance in the system, thereby controlling the mechanical energy for generating the first propulsion and the electrical energy for charging the power battery. The overall implementation is simple and highly reliable, ensuring the charging safety and charging speed of the power battery and providing the reliable adjustment of the first propulsion output and second propulsion output, comprehensively ensuring the voyage needs of the ship.

In some possible implementations, the converting the thermal energy into mechanical energy and converting the thermal energy into electrical energy include controlling, based on a propulsion demand of the ship, an amount of the thermal energy to be converted into the mechanical energy and an amount of the thermal energy to be converted into the electrical energy.

With the technical solutions of the embodiments of this application, the amount of thermal energy to be converted into mechanical energy and the amount of thermal energy to be converted into electrical energy may be adjusted in real-time based on the propulsion demand of the ship, thereby achieving reliable output of the first propulsion and the second propulsion to comprehensively ensure the voyage needs of the ship.

In some possible implementations, after the converting the chemical energy of the hydrogen-containing combustible substance into thermal energy, the method further includes continuing to convert the urea into the hydrogen-containing combustible substance by utilizing the thermal energy.

With the technical solutions of the embodiments of this application, the thermal energy generated in the system can be fully utilized to achieve a variety of functions, saving external heat required for converting urea into the hydrogen -containing combustible substance and improving the energy utilization efficiency of the entire propulsion system.

In some possible implementations, the hydrogen-containing combustible substance includes ammonia; where the converting the chemical energy of the hydrogen-containing combustible substance into thermal energy includes combusting the ammonia to convert chemical energy of the ammonia into thermal energy; and the method further includes treating nitrogen oxides produced by combustion of the ammonia.

With the technical solutions of the embodiments of this application, pollutants generated during the driving of the ship can be reduced, meeting the low-emission requirements for ship voyage.

In some possible implementations, the treating nitrogen oxides produced by combustion of the ammonia includes selectively catalytically reduce the nitrogen oxides using urea and/or ammonia.

With the technical solutions of the embodiments of this application, using the selective catalytic reduction (SCR) technology for denitrification of nitrogen oxides provides good implementation effects and is easy to implement in ship systems.

In some possible implementations, the hydrogen-containing combustible substance includes an ammonia-hydrogen mixture; where the converting urea stored in a ship into a hydrogen-containing combustible substance includes: converting the urea into ammonia; converting a part of the ammonia into hydrogen; and mixing the hydrogen into the remaining part of the ammonia to form the ammonia-hydrogen mixture; and the converting the chemical energy of the hydrogen-containing combustible substance into thermal energy includes combusting the ammonia-hydrogen mixture to convert chemical energy of the ammonia-hydrogen mixture into thermal energy.

With the technical solutions of the embodiments of this application, as compared to combusting ammonia alone, the ammonia-hydrogen mixture has stronger combustibility, which can improve the combustion stability and ignition performance of ammonia, thereby enhancing the conversion efficiency of the chemical energy of the ammonia-hydrogen mixture and improving fuel utilization.

In some possible implementations, the hydrogen-containing combustible substance includes hydrogen; where the converting urea stored in a ship into a hydrogen-containing combustible substance includes: converting the urea into ammonia; converting the ammonia into hydrogen; and the converting the chemical energy of the hydrogen-containing combustible substance into thermal energy includes combusting the hydrogen to convert chemical energy of the hydrogen into thermal energy.

With the technical solutions of the embodiments of this application, as compared to combusting ammonia or combusting the ammonia-hydrogen mixture, the product of hydrogen combustion is only water. Therefore, hydrogen can be used as a truly "zero" emission fuel, meeting the zero-emission requirements of the ship.

In some possible implementations, the converting urea stored in a ship into a hydrogen-containing combustible substance includes controlling conversion of the urea stored in the ship into the hydrogen-containing combustible substance within a first time period during voyage of the ship; and the method further includes controlling to stop conversion of the urea stored in the ship within a second time period during voyage of the ship.

With the technical solutions of the embodiments of this application, the conversion of urea in the ship can be controlled accordingly based on periods of voyage of the ship, preventing the conversion process of urea from affecting a special period during voyage of the ship to ensure safety during voyage of the ship.

In some possible implementations, the first time period is an intermediate period during voyage of the ship, and the second time period is a departure period and/or a berthing preparation period during voyage of the ship.

With the technical solutions of the embodiments of this application, the voyage safety of the ship can be ensured, and the influence of the ship on the people at the port can be reduced.

In some possible implementations, the urea is synthesized from green ammonia and carbon dioxide.

With the technical solutions of the embodiments of this application, carbon emissions in the urea manufacturing process can be reduced, resulting in a carbon-free and environmentally friendly manufacturing process.

According to a second aspect, a ship is provided, including: a storage device configured to store urea; a generation device configured to convert the urea into a hydrogen-containing combustible substance; and a propulsion device configured to utilize chemical energy of the hydrogen-containing combustible substance to generate propulsion for driving the ship.

In some possible implementations, the hydrogen-containing combustible substance includes ammonia and/or hydrogen.

In some possible implementations, the ship further includes a power battery; and the propulsion device includes: a conversion apparatus configured to convert the chemical energy of the hydrogen-containing combustible substance into thermal energy, and convert the thermal energy into electrical energy; and a charging apparatus configured to utilize the electrical energy to charge the power battery, the power battery being configured to provide propulsion for the ship.

In some possible implementations, the ship further includes a control device configured to control an output power of the electrical energy from the conversion apparatus based on a state parameter of the power battery, to control a charging speed at which the charging apparatus charges the power battery.

In some possible implementations, the control device is configured to: control the output power of the electrical energy from the conversion apparatus to be a first power in a case that a SOC of the power battery is greater than a first preset value; and control the output power of the electrical energy from the conversion apparatus to be a second power in a case that the SOC of the power battery is less than or equal to the first preset value; where the first power is less than the second power.

In some possible implementations, the control device is configured to control the hydrogen-containing combustible substance and/or the urea in the generation device based on the state parameter of the power battery to control the output power of the electrical energy.

In some possible implementations, the control device is configured to: control, based on the state parameter of the power battery, the conversion apparatus to control an amount of the chemical energy of the hydrogen-containing combustible substance to be converted into the thermal energy, controlling the output power of the electrical energy from the conversion apparatus; and/or control, based on the state parameter of the power battery, the conversion apparatus to control an amount of the thermal energy to be converted into the electrical energy, controlling the output power of the electrical energy from the conversion apparatus.

In some possible implementations, the conversion apparatus is further configured to convert the thermal energy into mechanical energy, the mechanical energy being used to generate first propulsion for driving the ship, and the power battery being configured to generate second propulsion for the ship.

In some possible implementations, the control device is configured to control, based on the state parameter of the power battery, the conversion apparatus to control an amount of the thermal energy to be converted into the mechanical energy and an amount of the thermal energy to be converted into the electrical energy.

In some possible implementations, the control device is configured to: control the conversion apparatus to convert a first part of the thermal energy into mechanical energy and convert a second part of the thermal energy into electrical energy in a case that the SOC of the power battery is greater than a second preset value; and control the conversion apparatus to convert a third part of the thermal energy into mechanical energy and convert a fourth part of the thermal energy into electrical energy in a case that the SOC of the power battery is less than or equal to the second preset value; where energy of the first part of the thermal energy is less than energy of the second part of the thermal energy, and energy of the third part of the thermal energy is greater than energy of the fourth part of the thermal energy.

In some possible implementations, the control device is configured to: control a first part of the hydrogen-containing combustible substance and/or a first part of the urea in the generation device based on the state parameter of the power battery, the first part of the hydrogen-containing combustible substance being used to be converted into mechanical energy by the conversion apparatus; and control a second part of the hydrogen-containing combustible substance and/or a second part of the urea in the generation device based on the state parameter of the power battery, the second part of the hydrogen-containing combustible substance being used to be converted to electrical energy by the conversion apparatus.

In some possible implementations, the control device is configured to: control the first part of the hydrogen-containing combustible substance in the generation device to be a first magnitude value and the second part of the hydrogen-containing combustible substance to be a second magnitude value in a case that the SOC of the power battery is greater than a third preset value; and control the first part of the hydrogen-containing combustible substance in the generation device to be a third magnitude value and the second part of the hydrogen-containing combustible substance to be a fourth magnitude value in a case that the SOC of the power battery is less than or equal to the third preset value; where the first magnitude value is less than the second magnitude value, and the third magnitude value is greater than the fourth magnitude value.

In some possible implementations, the control device is configured to control the amount of thermal energy to be converted into mechanical energy and the amount of thermal energy to be converted into electrical energy based on the propulsion demand of the ship.

In some possible implementations, the generation device is further configured to continue to convert the urea into the hydrogen-containing combustible substance by utilizing the thermal energy.

In some possible implementations, the hydrogen-containing combustible substance includes ammonia; the conversion apparatus is configured to combust the ammonia to convert the chemical energy of the ammonia into thermal energy; and the ship further includes a treatment device configured to treat nitrogen oxides produced by combustion of the ammonia.

In some possible implementations, the treatment device is configured to selectively catalytically reduce the nitrogen oxides by utilizing the urea and/or the ammonia.

In some possible implementations, the hydrogen-containing combustible substance includes an ammonia-hydrogen mixture; the generation device is configured to: convert the urea into ammonia, convert a part of the ammonia into hydrogen, and mix the hydrogen into the remaining part of the ammonia to form the ammonia-hydrogen mixture; and the conversion apparatus is configured to combust the ammonia-hydrogen mixture to convert chemical energy of the ammonia-hydrogen mixture into thermal energy.

In some possible implementations, the hydrogen-containing combustible substance includes hydrogen; the generation device is configured to convert the urea into ammonia and convert the ammonia into hydrogen; and the conversion apparatus is configured to combust the hydrogen to convert the chemical energy of the hydrogen into thermal energy.

In some possible implementations, the generation device is configured to: generate the hydrogen-containing combustible substance from the urea within a first time period during voyage of the ship; and control the generation of the hydrogen-containing combustible substance from the urea to stop within a second time period during voyage of the ship.

In some possible implementations, the first time period is an intermediate period during voyage of the ship, and the second time period is a departure period and/or a berthing preparation period during voyage of the ship.

In some possible implementations, the urea is synthesized from green ammonia and carbon dioxide.

With the technical solutions of the embodiments of this application, urea, as a safe, stable, easy-to-produce, and low-cost raw material, can be stably and reliably transported and stored in the ship, ensuring the stable driving and voyage safety of the ship. In addition, the hydrogen-containing combustible substance formed from the conversion of urea does not include sulfur element, which can effectively reduce pollutants such as sulfur oxides generated during the driving of the ship, meeting low pollutant emission requirements of the ship.

### BRIEF DESCRIPTION OF DRAWINGS

To describe technical solutions in embodiments of this application more clearly, the following briefly describes the accompanying drawings required for describing the embodiments of this application. Apparently, the accompanying drawings in the following description show merely some embodiments of this application, and persons of ordinary skill in the art may still derive other drawings from the accompanying drawings without creative efforts.
FIG. 1 is a schematic flowchart block diagram of a method for generating ship propulsion according to an embodiment of this application.
FIG. 2 is a schematic flowchart block diagram of another method for generating ship propulsion according to an embodiment of this application.
FIG. 3 is a schematic flowchart block diagram of another method for generating ship propulsion according to an embodiment of this application.
FIG. 4 is a schematic block diagram of a ship propulsion system according to an embodiment of this application.
FIG. 5 is a schematic flowchart block diagram of another method for generating ship propulsion according to an embodiment of this application.
FIG. 6 is a schematic flowchart block diagram of another method for generating ship propulsion according to an embodiment of this application.
FIG. 7 is a schematic block diagram of another ship propulsion system according to an embodiment of this application.
FIG. 8 is a schematic flowchart block diagram of another method for generating ship propulsion according to an embodiment of this application.
FIG. 9 is a schematic flowchart block diagram of another method for generating ship propulsion according to an embodiment of this application.
FIG. 10 is a schematic flowchart block diagram of another method for generating ship propulsion according to an embodiment of this application.
FIG. 11 is a schematic structural block diagram of a ship according to an embodiment of this application.
FIG. 12 is another schematic structural block diagram of a ship according to an embodiment of this application.
In the accompanying drawings, the figures are not necessarily drawn to scale.

### DESCRIPTION OF EMBODIMENTS

The following further describes implementations of this application in detail with reference to the accompanying drawings and embodiments. The detailed description of the following embodiments and the accompanying drawings are intended to illustrate the principle of this application rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application.

The term "and/or" in this application is only an associative relationship for describing associated objects, indicating that three relationships may be present. For example, A and/or B may indicate three cases: presence of A; presence of both A and B; and presence of B. In addition, the character "/" in this application generally indicates an "or" relationship between the contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", "third", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. It is explicitly or implicitly understood by persons skilled in the art that the embodiments described in this application may be combined with other embodiments.

Embodiments of this application are applicable to ships. Modern ships, while serving as one of the important means of transportation, have long surpassed the scope of mere transportation. Ships used for military purposes can be referred to as military ships. Ships used for transportation, marine development, engineering, fishing, and other aspects can be referred to as civilian ships. More specifically, ships applicable to the embodiments of this application example are motorized ships. The motorized ship is equipped with a power plant to generate propulsion for voyage.

Currently, mainstream ship propulsion plants include the following: internal combustion engine (Internal Combustion Engine, ICE), external combustion engine (External Combustion Engine), electric power plant, and nuclear power plant. Among these, internal combustion engine and external combustion engine can be referred to as heat engines, which are machines capable of converting a portion of the heat provided by a heat source into mechanical energy for external output. The internal combustion engine can convert chemical energy of fuel into kinetic energy. The typical implementation is as follows: a fuel is mixed with air and combusted to generate heat energy, and with the expansion of gases when heated, the heat energy is converted into mechanical energy through a mechanical apparatus to do work. An external combustion engine is a type of heat engine that uses the combustion of fuel outside a container to heat a circulating working fluid, thereby converting thermal energy into mechanical energy. For example, a steam engine transports the high-temperature and high-pressure steam generated by heating water in the boiler into the interior of the machine.

Electric power plants can include fuel cells (Fuel cell) and power batteries, where a fuel cell is a power generation plant that mainly converts chemical energy of a fuel into electrical energy through redox reactions with oxygen or another oxidizing agent. Advantages of fuel cells are that they can continuously produce stable electricity through a stable supply of oxygen and fuel sources until the fuel is exhausted. In this application, a power battery refers to a physical module that includes one or more battery cells to supply electrical energy. The power battery typically includes a box for packaging one or more battery cells. The box can prevent liquids or other foreign matter from affecting charge or discharge of the battery cells. Optionally, the battery cells may include lithium-ion secondary batteries, lithium-ion primary batteries, lithium-sulfur batteries, sodium-lithium-ion batteries, sodium-ion batteries, or magnesium-ion batteries, or the like.

A nuclear power plant is an apparatus that uses enormous energy generated by nuclear fission reactions to drive a steam turbine or a gas turbine through a medium (steam or gas). This type of apparatus is expensive to build, has a complex operation and management system, and requires advanced technology. It is generally used in large- and medium-sized submarines, aircraft carriers, icebreakers, and the like, and is rarely found in general civilian ships.

From the foregoing description, it can be seen that different types of ship propulsion plants have different characteristics. Considering comprehensively factors such as power range, thermal efficiency, reliability, and economy, internal combustion engines and external combustion engines still have significant advantages and are unlikely to be replaced by other new types of power plants in the short term.

In internal combustion engines and external combustion engines, commonly used fuels include conventional fuels such as diesel, gasoline, natural gas, methanol, and ethanol. During combustion of these fuels, emissions such as carbon dioxide (CO₂), carbon monoxide (CO), unburned hydrocarbons (HC), nitrogen oxides (NOx), sulfur oxides (SOx), particulates (a mixture of soot, high boiling point soluble hydrocarbons, and the like) are produced. These emissions can cause serious pollution to the atmospheric environment.

To achieve low emissions for ships, some related studies are actively exploring the safe and efficient application of new energy sources such as ammonia and hydrogen in ship internal combustion engines. Among these, ammonia fuel, as a zero-carbon energy source, can effectively reduce carbon oxides and sulfur oxides, helping ships meet low emission requirements. Hydrogen fuel can be used as a truly zero-emission fuel, producing no pollutants that harm the atmosphere.

However, in practical applications, there are still certain technical issues with the use of ammonia fuel and hydrogen fuel. For example, ammonia fuel is often stored in the form of liquid ammonia. Liquid ammonia is a substance classified as a fire hazard and poses safety risks such as toxicity, corrosiveness, and explosiveness in the event of a leak. Hydrogen fuel is very low in density, requiring a very large space for gaseous storage, while liquid hydrogen needs to be stored at very low temperatures (greater than -252.8°C).

In view of this, how to provide ship propulsion that is both safe and reliable while achieving low pollutant emissions is a technical issue that urgently needs to be addressed in ship technology.

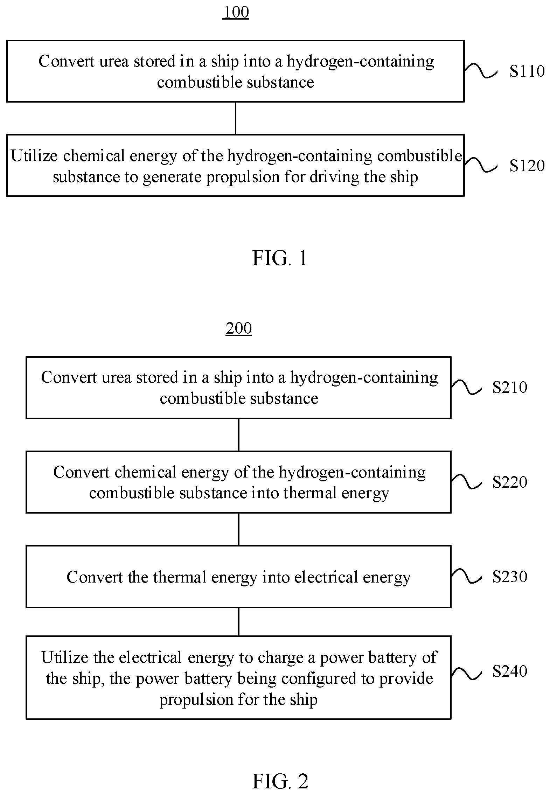

FIG. 1 is a schematic flowchart block diagram of a method 100 for generating ship propulsion according to an embodiment of this application.

As shown in FIG. 1, the method 100 for generating ship propulsion includes the following steps:
S110. Convert urea stored in a ship into a hydrogen-containing combustible substance; and
S120. Utilize chemical energy of the hydrogen-containing combustible substance to generate propulsion for driving the ship.

Specifically, in step S110, the ship has urea (CH₄N₂O) in storage. At normal temperature, urea is a colorless crystal or powder with stable properties. From the molecular formula of urea, it is known that urea contains hydrogen (H) element. In practical applications, urea can be converted into a hydrogen-containing combustible substance through chemical reactions or other methods. The chemical composition of the hydrogen-containing combustible substance contains hydrogen (H) element.

The hydrogen-containing combustible substance is easy to combust or convenient for subsequent chemical reaction processing, and its chemical energy can be effectively converted into other forms of energy to generate propulsion for driving the ship. In addition, the hydrogen-containing combustible substance formed from the conversion of urea contains no sulfur element, which can effectively reduce pollutants such as sulfur oxides generated during the driving of the ship, meeting low pollutant emission requirements of the ship.

Optionally, the ship may be provided with a storage device and a generation device, where the storage device is configured to store urea on the ship. The generation device is configured to perform chemical reactions of urea to convert the urea into a hydrogen-containing combustible substance.

In step S120, the hydrogen-containing combustible substance can convert its chemical energy into other forms of energy in various ways, thereby generating propulsion for driving the ship. In an example, the hydrogen-containing combustible substance can convert chemical energy into thermal energy through combustion, and the thermal energy is converted into mechanical energy to generate propulsion for driving the ship. In another example, the hydrogen-containing combustible substance can convert chemical energy into electrical energy through chemical reactions in an electrolyte, and the electrical energy is converted into mechanical energy to generate propulsion for driving the ship.

Optionally, the ship is also provided with a propulsion device. The propulsion device is configured to utilize chemical energy of the hydrogen-containing combustible substance to generate propulsion for driving the ship. For example, the propulsion device may include an internal/external combustion engine, and a hydrogen-containing combustible substance may be used as a fuel for the internal/external combustion engine. The internal/external combustion engine can convert chemical energy of the hydrogen-containing combustible substance into thermal energy through combustion, and then convert the thermal energy into mechanical energy to generate propulsion for driving the ship. In another example, the propulsion device may also include a fuel cell and an electric motor. A hydrogen-containing combustible substance may be used as a raw material for the fuel cell. The fuel cell converts chemical energy of the hydrogen-containing combustible substance into electrical energy through chemical reactions, and the electrical energy can be converted into mechanical energy by the electric motor to generate propulsion for driving the ship.

Currently, global annual industrial production of urea is approximately one billion tons. Current urea production capacity in China is 64 million tons. Commercial urea may be produced through the reaction of ammonia and carbon dioxide. The finished urea may be in the form of tablets, granules, flakes, crystals, or solutions, making it convenient for transportation to and storage on ships.

In summary, with the technical solutions of this embodiment of this application, urea, as a safe, stable, easy-to-produce, and low-cost raw material, can be stably and reliably transported and stored in the ship, ensuring the stable driving and voyage safety of the ship. In addition, the hydrogen-containing combustible substance formed from the conversion of urea does not include sulfur element, which can effectively reduce pollutants such as sulfur oxides generated during the driving of the ship, meeting low pollutant emission requirements of the ship.

In some possible implementations, the foregoing hydrogen-containing combustible substance may include ammonia and/or hydrogen.

Optionally, ammonia may exist as ammonia gas, liquid ammonia, a gas-liquid mixture of ammonia, or the like. Similarly, hydrogen may exist as hydrogen gas, liquid hydrogen, a gas-liquid mixture of hydrogen, or the like.

The ammonia and hydrogen obtained from the conversion of urea are not only combustible, making it easy to convert chemical energy into other forms of energy, but also can be used as low-emission or even zero-emission fuels, greatly reducing the pollutant emissions of the ship propulsion system.

In related implementations, urea can be converted into ammonia and/or hydrogen in various ways.

In some embodiments, urea may be converted into ammonia through hydrolysis or pyrolysis reactions.

In other embodiments, after urea is converted into ammonia, the ammonia may be further converted into hydrogen through thermal decomposition reactions.

In yet some other embodiments, urea can be converted into hydrogen through electrolysis reactions.

In the ship, the generation device may include a hydrolysis reaction apparatus, a pyrolysis reaction apparatus, or an electrolysis reaction apparatus, used to provide relevant conditions for the hydrolysis reactions, pyrolysis reactions, or electrolysis reactions described above to support the conversion of urea into ammonia and/or hydrogen through the generation device.

Specifically, for technical solutions and reaction conditions for the various reactions described above, reference may be made to specific methods in the related technology, and details are not described herein.

FIG. 2 is a schematic flowchart block diagram of another method 200 for generating ship propulsion according to an embodiment of this application.

As shown in FIG. 2, the method 200 for generating ship propulsion includes the following steps:
S210. Convert urea stored in a ship into a hydrogen-containing combustible substance;
S220. Convert chemical energy of the hydrogen-containing combustible substance into thermal energy;
S230. Convert the thermal energy into electrical energy; and
S240. Utilize the electrical energy to charge a power battery of the ship, the power battery being configured to provide propulsion for the ship.

Optionally, in this embodiment of this application, the foregoing steps S220 to S240 may be an implementation of step S120 in the embodiment shown in FIG. 1 above.

In step S220, the chemical energy of the hydrogen-containing combustible substance may be converted into thermal energy through chemical reactions such as combustion. In step S230, the thermal energy may be converted into mechanical energy first, and then the mechanical energy is further converted into electrical energy.

Optionally, in specific implementations, the foregoing steps S220 and S230 may be implemented by a combination of an internal/external combustion engine and a generator. The internal/external combustion engine may convert the chemical energy of the hydrogen-containing combustible substance into mechanical energy, and the mechanical energy is used to rotate the electromagnetic rotor in the generator to generate electrical energy.

In step S240, the ship is provided with a power battery, and electrical energy generated by the generator may be used to charge the power battery. The power battery can serve as a propulsion source of the ship to provide propulsion for the ship.

Optionally, in some implementations, the power battery can serve as a main propulsion source of the ship. The power battery can provide controllable and stable output power to the ship for a long time, with small fluctuations in output power, ensuring relatively stable and reliable support for voyage of the ship.

Alternatively, in some other implementations, the power battery may serve as a backup propulsion source or supplementary propulsion source for the ship, providing backup propulsion or supplementary propulsion to the ship in case other main propulsion sources of the ship fail or have insufficient output power, to comprehensively ensure normal voyage of the ship.

In summary, with the technical solutions of this embodiment of this application, after the urea stored in the ship is converted into a hydrogen-containing combustible substance, the chemical energy of the hydrogen-containing combustible substance can be converted into electrical energy, thereby implementing the charging of the power battery of the ship. The power battery can provide controllable and stable output power to the ship, which can stably and reliably meet the navigation requirements of the ship. In addition, the power battery can also assist other propulsion sources of the ship to comprehensively ensure normal voyage of the ship.

Optionally, in some implementations, the foregoing step S240 may include controlling an output power of the electrical energy based on a state parameter of the power battery to control a charging speed at which the power battery is charged.

Specifically, state parameters of the power battery include but are not limited to parameters such as voltage, current, temperature, state of charge (State of Charge, SOC), and state of health (State of Health, SOH).

Optionally, in addition to the power battery and the generator, the ship is also provided with a control device. The control device may be configured to perform the foregoing steps. Specifically, the control device may control an output power of the electrical energy from the generator based on a state parameter of the power battery to control a charging speed at which the power battery is charged.

During charging of the power battery, the state parameters of the power battery may indicate a current state of the power battery in real-time. By controlling the charging of the power battery based on a state parameter of the power battery, the entire charging process can be optimized, preventing abnormal situations such as low charging efficiency or overcharging of the power battery and ensuring safe charging of the power battery.

Optionally, in a case that a state parameter of the power battery indicates that the power battery is about to be fully charged or the power battery is in a near-abnormal state, the control device may control the output power of the electrical energy from the generator to be smaller to reduce the charging speed at which the power battery is charged. Correspondingly, when a state parameter of the power battery indicates that the power battery has low power capacity or the power battery is in a normal operating state, the control device may control the output power of the electrical energy from the generator to be larger to increase the charging speed at which the power battery is charged.

In summary, in this embodiment of this application, the output power of the electrical energy for charging the power battery may be adjusted in real-time based on a state parameter of the power battery, thereby adjusting the charging speed of the power battery to comprehensively ensure the charging efficiency and safety of the power battery.

In some embodiments, the foregoing step S240 may include: control the output power of the electrical energy to be a first power in a case that a SOC of the power battery is greater than a first preset value; and control the output power of the electrical energy to be a second power in a case that the SOC of the power battery is less than or equal to the first preset value, where the first power is less than the second power.

Similar to the embodiments above, in the embodiments, the control device on the ship may perform the steps. For example, the control device is configured to control the output power of the electrical energy from the generator to be a first power in a case that a SOC of the power battery is greater than a first preset value; and the control device is configured to control the output power of the electrical energy from the generator to be a second power in a case that the SOC of the power battery is less than or equal to the first preset value. Optionally, the first preset value may be flexibly set according to actual needs, and the first preset value may be used to determine whether the remaining power capacity of the power battery is sufficient. Optionally, the first preset value may be determined comprehensively based on the current operating conditions of the power battery and/or other state parameters such as the SOH and temperature of the power battery, thereby comprehensively ensuring the rationality of the design of the first preset value.

In the embodiments, the SOC of the power battery may be directly used to characterize the remaining power capacity of the power battery. When the SOC of the power battery is high, that is, greater than the first preset value, the remaining power capacity of the power battery is sufficient, and an output power of the electrical energy from the generator can be reduced to lower the charging rate of the power battery, preventing overcharging of the power battery due to excessive charging speed. Correspondingly, when the SOC of the power battery is low, that is, less than or equal to the first preset value, the remaining power capacity of the power battery is insufficient, and the output power of the electrical energy from the generator can be increased to increase the charging rate of the power battery, so that the power capacity of the power battery can be quickly increased, ensuring a stable supply of ship propulsion.

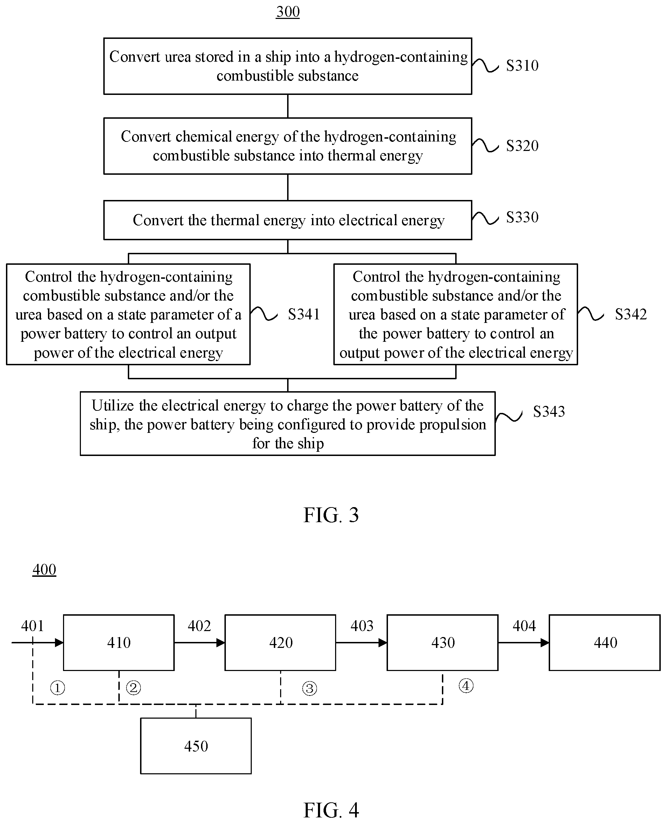

FIG. 3 is a schematic flowchart block diagram of another method 300 for generating ship propulsion according to an embodiment of this application.

As shown in FIG. 3, the method 300 for generating ship propulsion includes the following steps:
S310. Convert urea stored in a ship into a hydrogen-containing combustible substance;
S320. Convert chemical energy of the hydrogen-containing combustible substance into thermal energy;
S330. Convert the thermal energy into electrical energy;
S341. Control the hydrogen-containing combustible substance and/or the urea based on a state parameter of the power battery to control an output power of the electrical energy; and
Step S350. Utilize the output power of the electrical energy to charge the power battery of the ship.

Specifically, in this embodiment of this application, for steps S310 to S330, reference may be made to the relevant descriptions of steps S210 to S230 in the embodiment shown in FIG. 2 above, and details are not repeated herein. Steps S340 and S350 may be an implementation of the step S240 above.

Optionally, the foregoing step S341 may be performed by the control device on the ship. In some implementations, the control device may be configured to control the hydrogen-containing combustible substance generated in the generation device based on the state parameter of the power battery to control the output power of the electrical energy generated from the conversion of the hydrogen-containing combustible substance. In some other implementations, the control device may be configured to control the urea input to the generation device based on the state parameters of the power battery, to control the hydrogen-containing combustible substance formed by the conversion of the urea and further control the output power of the electrical energy generated from the corresponding conversion of the hydrogen-containing combustible substance.

Optionally, the foregoing step S350 may be performed by a generator on the ship. The output power of the electrical energy from the generator depends on a generation volume of the hydrogen-containing combustible substance generated at front end. By controlling the generation volume of the hydrogen-containing combustible substance in the front-end generation device using the control device, the output power of the electrical energy from the generator is also adjusted. This adjusted output power of the electrical energy may then be utilized to charge the power battery of the ship.

With the technical solutions of this embodiment of this application, when the state parameter of the power battery changes, the adjustment of the urea and/or the hydrogen-containing combustible substance in the system can not only adjust the charging rate of the power battery, ensuring the charging performance of the power battery, but also control and save the use of urea on the ship, so as to save the space on the ship for urea storage, or extend the mileage that the ship can travel with the available urea.

Optionally, as shown in FIG. 3, in addition to controlling the output power of the electrical energy through the foregoing step S341, the output power of the electrical energy may also be controlled through the following step S342.

Specifically, step S342 includes controlling, based on the state parameter of the power battery, an amount of the chemical energy of the hydrogen-containing combustible substance to be converted into the thermal energy and/or an amount of the thermal energy to be converted into the electrical energy to control the output power of the electrical energy.

It can be understood that step S342 may also be performed by the control device on the ship. In some implementations, the control device is configured to control the operation of the internal/external combustion engine based on the state parameters of the power battery to control the conversion of the chemical energy of the hydrogen-containing combustible substance into thermal energy and/or the amount of the thermal energy to be converted into mechanical energy, thereby controlling the output power of the electrical energy generated from the conversion of the mechanical energy. In some other implementations, the control device is configured to control the operation of the generator based on the state parameter of the power battery, so as to control an amount of the mechanical energy output from the internal/external combustion engine to be converted into the electrical energy and thus control the output power of the electrical energy.

It should be noted that the conversion of thermal energy into electrical energy in step S342 may include two parts: the conversion of thermal energy into mechanical energy and the conversion of mechanical energy into electrical energy. Therefore, when energy conversion is implemented through a combination of the internal/external combustion engine and the generator, the control device may simultaneously control the internal/external combustion engine and the generator to control the conversion of thermal energy into electrical energy.

In this case, in step S350, the output power of the electrical energy from the generator depends on the amount of the chemical energy of the hydrogen-containing combustible substance converted by the internal/external combustion engine and the generator. When the control device controls the operations of the internal/external combustion engine and the generator, the output power of the electrical energy from the generator is also adjusted. This adjusted output power may then be utilized to charge the power battery of the ship.

With the technical solutions of this embodiment of this application, when the state parameter of the power battery changes, the adjustment of the amount of conversion between various forms of energy in the system can achieve the adjustment of the output power of the electrical energy to adjust the charging rate of the power battery. This technical solution is conducive to improving the adjustment accuracy of the output power of the electrical energy, thereby further ensuring the charging performance of the power battery.

For ease of understanding of the technical solutions of the foregoing embodiments of this application, FIG. 4 shows a schematic block diagram of a ship propulsion system 400 according to an embodiment of this application.

As shown in FIG. 4, the ship propulsion system 400 includes: a generation device 410, an internal/external combustion engine 420, a generator 430, a power battery 440, and a control device 450.

Urea 401 is input into the generation device 410 to form a hydrogen-containing combustible substance 402. The internal/external combustion engine 420 combusts the hydrogen-containing combustible substance 402 to convert chemical energy of the hydrogen-containing combustible substance 402 into thermal energy and then converts the thermal energy into mechanical energy 403. The generator 430 uses the mechanical energy 403 to generate electrical energy 404. The electrical energy 404 is input to the power battery 440 to charge the power battery 440.

The control device 450 may control the output power of the electrical energy 404 in the following ways to control the charging rate at which the power battery 440 is charged.

### I: Controlling the input amount of urea 401.

II: Controlling the generation device 410 to control the generation volume of the hydrogen-containing combustible substance 402.

III: Controlling the internal/external combustion engine 420 to control the amount of chemical energy of the hydrogen-containing combustible substance 402 to be converted into thermal energy and/or the amount of thermal energy to be converted into mechanical energy 403.

IV: Controlling the generator 430 to control the amount of mechanical energy 403 to be converted into electrical energy 404.

In the above embodiments of this application, the power battery can be used alone to provide propulsion to the ship, and the control device can be used to control the charging speed of the power battery to ensure the charging safety of the battery. In the following embodiments, in addition to the power battery providing propulsion to the ship, there may be other ways available to provide propulsion to the ship.

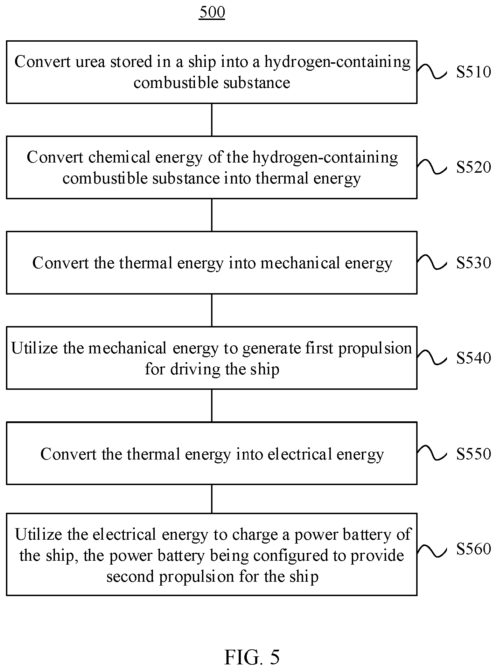

FIG. 5 is a schematic flowchart block diagram of another method 500 for generating ship propulsion according to an embodiment of this application.

As shown in FIG. 5, the method 500 for generating ship propulsion includes the following steps:
S510. Convert urea stored in a ship into a hydrogen-containing combustible substance;
S520. Convert chemical energy of the hydrogen-containing combustible substance into thermal energy;
S530. Convert the thermal energy into mechanical energy;
S540: Utilize the mechanical energy to generate first propulsion for driving the ship.
S550. Convert the thermal energy into electrical energy; and
S560. Utilize the electrical energy to charge a power battery of the ship, the power battery being configured to provide second propulsion for the ship.

Optionally, for technical solutions related to the foregoing steps S510 to S520 and S550 to S560, reference may be made to the relevant descriptions of the above embodiments.

In steps S530 and S540, the thermal energy obtained from the chemical energy of the hydrogen-containing combustible substance through combustion may be converted into mechanical energy, and the mechanical energy may be directly utilized to generate the first propulsion for driving the ship.

Optionally, the steps S530 and S540 may be performed by the internal/external combustion engine, that is, the internal/external combustion engine may convert the chemical energy of the hydrogen-containing combustible substance into thermal energy, and further convert the thermal energy into mechanical energy to generate the first propulsion for driving the ship. In other words, the internal/external combustion engine may directly serve as the first propulsion source of the ship.

In conjunction with steps S520 to S560, in some implementations of this application, the internal/external combustion engine converts the chemical energy of the hydrogen-containing combustible substance into thermal energy, and after the thermal energy is converted into mechanical energy, a part of the mechanical energy is used to generate the first propulsion for driving the ship, and another part is used to generate electrical energy through the generator to charge the power battery. The power battery may serve as the second propulsion source of the ship.

With the technical solutions of this embodiment of this application, the urea stored in the ship can provide two forms of propulsion to the ship. These two forms of propulsion can assist and complement each other. When one form of propulsion encounters an abnormality or failure, the other can continue to be used to ensure the voyage needs of the ship.

In some possible implementations, the steps S530 and S550 may include controlling, based on the state parameter of the power battery, an amount of the thermal energy to be converted into the mechanical energy and an amount of the thermal energy to be converted into the electrical energy.

Specifically, the foregoing steps may be performed by the control device on the ship. Optionally, the control device is configured to control the operation of the internal/external combustion engine based on the state parameters of the power battery to control the amount of the thermal energy to be converted into the mechanical energy and the amount of the thermal energy to be converted into the electrical energy.

It should be noted that in the implementations and the following related implementations, the amount of the thermal energy to be converted into mechanical energy refers to the amount of thermal energy to be converted into mechanical energy that directly provides the first propulsion. A part of the thermal energy is used for conversion into mechanical energy that directly provides the first propulsion, and another part is used for conversion into intermediate mechanical energy first. The intermediate mechanical energy is then converted into electrical energy.

With a certain amount of thermal energy, a larger amount of thermal energy to be converted into mechanical energy results in a smaller the amount of thermal energy to be converted into electrical energy, and vice versa. The amount of thermal energy to be converted into mechanical energy may determine the energy of the first propulsion. A higher amount of the thermal energy to be converted into mechanical energy results in a greater amount of energy of the first propulsion. Correspondingly, the amount of thermal energy to be converted into electrical energy may determine the charging status of the power battery. A higher amount of thermal energy to be converted into electrical energy results in a greater output power of the electrical energy, faster charging speed, and a higher power capacity of the power battery, which in turn leads to a greater amount of energy of the second propulsion.

Optionally, in a case that a state parameter of the power battery indicates that the power battery is about to be fully charged or the power battery is in a near-abnormal state, the control device may control the amount of thermal energy from the internal/external combustion engine to be converted into electrical energy to be smaller to reduce the charging speed at which the power battery is charged, ensuring the charging safety of the power battery. Simultaneously, the control device may control the amount of thermal energy from the internal/external combustion engine to be converted into mechanical energy to be larger, enhancing the driving force of the first propulsion.

Correspondingly, when a state parameter of the power battery indicates that the power battery has low power capacity or the power battery is in a normal operating state, the control device may control the amount of thermal energy from the internal/external combustion engine to be converted into electrical energy to be larger to increase the charging speed at which the power battery is charged, ensure that the power capacity of the power battery can be quickly increased, and provide a stable second propulsion for the ship. Simultaneously, the control device can control the amount of thermal energy converted into mechanical energy by the internal/external combustion engine to be smaller, ensuring the continuous output of the first propulsion.

In summary, in this embodiment of this application, the amount of thermal energy to be converted into mechanical energy and the amount of thermal energy to be converted into electrical energy may be adjusted in real-time based on the state parameter of the power battery. The charging speed of the power battery may be adjusted based on the state parameter of the power battery to ensure the charging efficiency and safety of the power battery. In addition, the thermal energy of the hydrogen-containing combustible substance can be fully utilized to adjust the output of the first propulsion and the second propulsion, comprehensively ensuring the voyage needs of the ship.

In some implementations, the foregoing steps S530 and S550 may include: controlling conversion of a first part of the thermal energy into mechanical energy and conversion of a second part of the thermal energy into electrical energy in a case that the SOC of the power battery is greater than a second preset value, where energy of the first part of the thermal energy is greater than energy of the second part of the thermal energy; and controlling conversion of a third part of the thermal energy into mechanical energy and conversion of a fourth part of the thermal energy into electrical energy in a case that the SOC of the power battery is less than or equal to the second preset value, where energy of the third part of the thermal energy is greater than energy of the fourth part of the thermal energy.

Optionally, similar to the first preset value in the above embodiments, the second preset value in the implementations may also be flexibly set according to actual needs, and the second preset value may be used to determine whether the remaining power capacity of the power battery is sufficient. In some embodiments, the second preset value may be the same as the foregoing first preset value, or the second preset value may be different from the foregoing first preset value.

Specifically, in the implementations, the SOC of the power battery may be directly used to characterize the remaining power capacity of the power battery. When the SOC of the power battery is high, for example, when the SOC of the power battery is greater than the second preset value, the remaining power capacity of the power battery is sufficient. The control device can control the operation of the internal/external combustion engine to control the conversion of a first part of the thermal energy with higher energy into mechanical energy directly generating the first propulsion and the conversion of a second part of the thermal energy with lower energy into electrical energy to charge the power battery with sufficient power capacity, reducing the charging speed.

When the SOC of the power battery is low, for example, when the SOC of the power battery is less than the second preset value, the remaining power capacity of the power battery is insufficient. The control device can control the operation of the internal/external combustion engine to control the conversion of a third part of the thermal energy with lower energy into mechanical energy directly generating the first propulsion and the conversion of a fourth part of the thermal energy with higher energy into electrical energy to charge the power battery with insufficient power capacity, increasing the charging speed.

With the technical solutions of the embodiments, the SOC of the power battery is used to control the conversion of thermal energy into mechanical energy and the conversion of thermal energy into electrical energy. The implementation is simple and highly reliable, ensuring the charging safety and charging speed of the power battery and providing the reliable adjustment of the output of the first propulsion and the second propulsion, comprehensively ensuring the voyage needs of the ship.

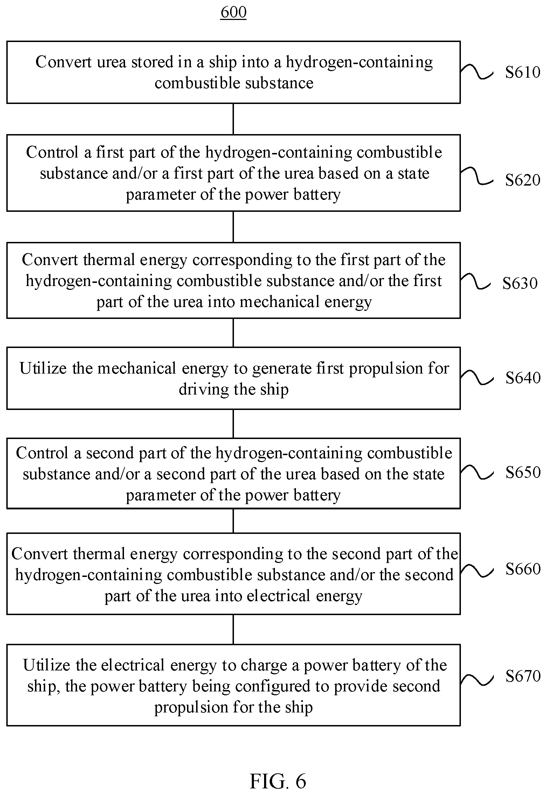

FIG. 6 is a schematic flowchart block diagram of another method 600 for generating ship propulsion according to an embodiment of this application.

As shown in FIG. 6, the method 600 for generating ship propulsion includes the following steps:
S610. Convert urea stored in a ship into a hydrogen-containing combustible substance;
S620. Control a first part of the hydrogen-containing combustible substance and/or a first part of the urea based on a state parameter of the power battery;
S630. Convert thermal energy corresponding to the first part of the hydrogen-containing combustible substance and/or the first part of the urea into mechanical energy;
S640. Utilize the mechanical energy to generate first propulsion for driving the ship;
S650. Control a second part of the hydrogen-containing combustible substance and/or a second part of the urea based on the state parameter of the power battery;
S660. Convert thermal energy corresponding to the second part of the hydrogen-containing combustible substance and/or the second part of the urea into electrical energy; and
S670. Utilize the electrical energy to charge a power battery of the ship, the power battery being configured to provide second propulsion for the ship.

Optionally, in this embodiment of this application, steps S620 to S630 may be an implementation of steps S520 and S530 in the embodiment shown in FIG. 5 above; and steps S650 and S660 may be an implementation of steps S520 and S550 in the embodiment shown in FIG. 5 above. In addition, for relevant descriptions of steps S610, S640, and S670, reference may be made to the above embodiments, and details are not repeated herein.

In steps S620 to S630, the control device on the ship may be configured to control the hydrogen-containing combustible substance generated in the generation device and/or the urea input to the generation device based on the state parameter of the power battery.

In some implementations, the control device may control the hydrogen-containing combustible substance generated by the generation device to be divided into two parts, where a first part of the hydrogen-containing combustible substance is used for conversion into mechanical energy directly providing the first propulsion. Specifically, the chemical energy of the first part of the hydrogen-containing combustible substance may be first converted into thermal energy, and then the thermal energy is converted into mechanical energy. A second part of the hydrogen-containing combustible substance is used for conversion into electrical energy for charging the power battery. Similarly, the chemical energy of the second part of the hydrogen-containing combustible substance may be first converted into thermal energy, and then the thermal energy is converted into electrical energy.

In some other implementations, the control device may also control the urea input to the generation device to be divided into two parts. A first part of the urea corresponds to the generation of the first part of the hydrogen-containing combustible substance, which is used for conversion into mechanical energy providing the first propulsion. A second part of the urea corresponds to the generation of the second part of the hydrogen-containing combustible substance, which is used for conversion into electrical energy for charging the power battery.

In specific implementation, the relevant structure of the generation device may be designed in such a way that two parts of urea can be input and/or two parts of the hydrogen-containing combustible substance can be output. In the subsequent internal/external combustion engine, two input system may also be provided, where one input system is configured to input the first part of the hydrogen-containing combustible substance for generating mechanical energy providing the first propulsion, and another input system is used to input the second part of the hydrogen-containing combustible substance for providing propulsion to the generator, so that the electrical energy generated by the generator charges the power battery.

With the technical solutions of this embodiment of this application, when the state parameter of the power battery changes, the two parts of urea and/or the two parts of the hydrogen-containing combustible substance in the system may be adjusted to control the mechanical energy for generating the first propulsion and the electrical energy for charging the power battery, effectively ensuring the charging safety and charging speed of the power battery and providing the reliable adjustment of the output of the first propulsion and the second propulsion, comprehensively ensuring the voyage needs of the ship.

In some implementations, the foregoing steps S620 and S650 may include: controlling the first part of the hydrogen-containing combustible substance to be a first magnitude value and the second part of the hydrogen-containing combustible substance to be a second magnitude value in a case that the SOC of the power battery is greater than a third preset value, where the first magnitude value is greater than the second magnitude value; and controlling the first part of the hydrogen-containing combustible substance to be a third magnitude value and the second part of the hydrogen-containing combustible substance to be a fourth magnitude value in a case that the SOC of the power battery is less than or equal to the third preset value, where the third magnitude value is less than the fourth magnitude value.

Optionally, similar to the first preset value and the second preset value in the above embodiments, the third preset value in the implementations may also be used to determine whether the remaining power capacity of the power battery is sufficient. For the specific design method of the third preset value, reference may be made to the relevant descriptions of the first preset value and the second preset value above, and details are not repeated herein.

Specifically, in the implementations, in a case that the SOC of the power battery is high, for example, the SOC of the power battery is greater than the third preset value, the control device is configured to control the magnitude value of the first part of the hydrogen-containing combustible substance to be a larger first magnitude value so that the first part of the hydrogen-containing combustible substance correspondingly generates mechanical energy with greater energy, providing greater first propulsion for the ship. In addition, the control device is further configured to control the magnitude value of the second part of the hydrogen-containing combustible substance to be a smaller second magnitude value so that the second part of the hydrogen-containing combustible substance correspondingly generates electrical energy with lesser energy, reducing the charging speed of the power battery with sufficient power capacity and ensuring charging safety.

In a case that the SOC of the power battery is low, for example, the SOC of the power battery is less than the third preset value, the control device is configured to control the magnitude value of the first part of the hydrogen-containing combustible substance to be a smaller third magnitude value so that the first part of the hydrogen-containing combustible substance correspondingly generates mechanical energy with lesser energy. In addition, the control device is further configured to control the magnitude value of the second part of the hydrogen-containing combustible substance to be a larger fourth magnitude value so that the second part of the hydrogen-containing combustible substance correspondingly generates electrical energy with greater energy, increasing the charging speed of the power battery with insufficient power capacity.

It can be understood that based on the SOC of the power battery, the control device can control the magnitude value of the first part of the urea and the magnitude value of the second part of the urea in addition to the magnitude value of the first part of the hydrogen-containing combustible substance and the magnitude value of the second part of the hydrogen-containing combustible substance. For example, in a case that the SOC of the power battery is greater than the third preset value, the first part of the urea is controlled to be a fifth magnitude value and the second part of the urea is controlled to be a sixth magnitude value, where the fifth magnitude value is greater than the sixth magnitude value; and in a case that the SOC of the power battery is less than or equal to the third preset value, the first part of the urea is controlled to be a seventh magnitude value and the second part of the urea is controlled to be an eighth magnitude value, where the seventh magnitude value is less than the eighth magnitude value.

It should be noted that the magnitude values in the above embodiments can be used to characterize the amount of hydrogen-containing combustible substance or the amount of urea. The units of the magnitude values may be, for example, mol, kg, L, or other units used to characterize the amount of substances.

With the technical solutions of the embodiments, the SOC of the power battery is used to control the magnitude values of the two parts of urea and/or the two parts of the hydrogen-containing combustible substance in the system, thereby controlling the mechanical energy for generating the first propulsion and the electrical energy for charging the power battery. The overall implementation is simple and highly reliable, ensuring the charging safety and charging speed of the power battery and providing the reliable adjustment of the first propulsion output and second propulsion output, comprehensively ensuring the voyage needs of the ship.

In the above embodiments of this application, the control device may control the adjustment and output of the first propulsion and the second propulsion based on the state parameter of the power battery. In some embodiments below, the control device may control the adjustment and output of the first propulsion and the second propulsion based on the propulsion demand of the ship.

For example, the control device may control a corresponding amount of thermal energy of the hydrogen-containing combustible substance to be converted into mechanical energy and a corresponding amount of thermal energy to be converted into electrical energy based on the propulsion demand of the ship.

Specifically, the first propulsion provided by mechanical energy and the second propulsion provided by the power battery have different characteristics and applicable scenarios. As an example rather than a limitation, the first propulsion provided by mechanical energy may have high instantaneous energy, meeting the propulsion demand of the ship for instantaneous high-power; and the second propulsion provided by the power battery may maintain a stable state for a long time, meeting the propulsion demand for stable ship navigation.

Therefore, under different propulsion demands of the ship, the control device provides different propulsion schemes to the ship. Specifically, in a case that the amount of thermal energy obtained from the combustion of the hydrogen-containing combustible substance to be converted into mechanical energy is large, the first propulsion provided by the mechanical energy is large, meeting the propulsion demand of the ship for instantaneous high-power; and in a case that the amount of thermal energy obtained from the combustion of the hydrogen-containing combustible substance to be converted into electrical energy is large, the charging speed at which the electrical energy charges the power battery is fast, and the power battery may have sufficient power capacity for a long time to provide continuous and stable second propulsion to the ship, meeting the propulsion demand for stable ship navigation.

With the technical solutions of this embodiment of this application, the amount of thermal energy to be converted into mechanical energy and the amount of thermal energy to be converted into electrical energy may be adjusted in real-time based on the propulsion demand of the ship, thereby achieving reliable output of the first propulsion and the second propulsion to comprehensively ensure the voyage needs of the ship.

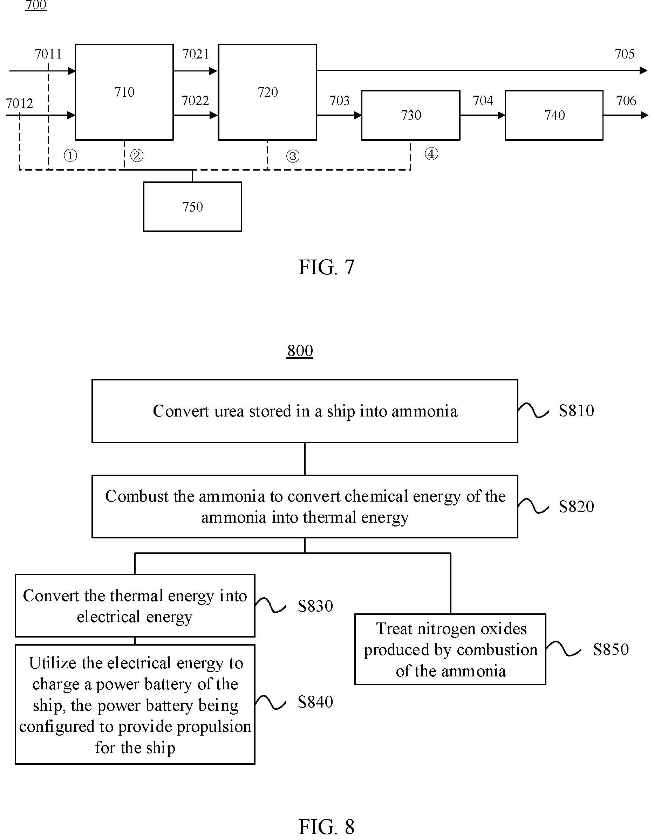

For ease of understanding of the technical solutions of the foregoing embodiments of this application, FIG. 7 shows a schematic block diagram of a ship propulsion system 700 according to an embodiment of this application.

As shown in FIG. 7, the ship propulsion system 700 includes: a generation device 710, an internal/external combustion engine 720, a generator 730, a power battery 740, and a control device 750.

A first part 7011 of the urea and a second part 7012 of the urea are input into the generation device 710 to generate a first part of the hydrogen-containing combustible substance 7021 and a second part of the hydrogen-containing combustible substance 7022, respectively. After the two parts of the hydrogen-containing combustible substance 7022 are input into the internal/external combustion engine 720 for combustion, a part of the mechanical energy formed is used to generate the first propulsion 705, and another part of the mechanical energy 703 is used to output to the generator 730 for generating electrical energy 704. The electrical energy 704 is used to charge the power battery 740, and the power battery 740 generates the second propulsion 706.

The control device 750 may control the output of the first propulsion 705 and the second propulsion 706 in the following manners.
I: Controlling an input amount of a first part 7011 of urea and an input amount of a second part 7012 of the urea.
II: Controlling the generation device 710 to control a generation volume of a first part 7021 of a hydrogen-containing combustible substance and a generation volume of a second part 7022 of the hydrogen-containing combustible substance.
III: Controlling the internal/external combustion engine 720 to control an amount of thermal energy corresponding to the first part of the hydrogen-containing combustible substance 7021 to be converted into mechanical energy for generating the first propulsion 705 and an amount of thermal energy corresponding to the second part of the hydrogen-containing combustible substance 7022 to be converted into mechanical energy 703 for generating the second propulsion 706.
IV: Controlling the generator 730 to control the amount of mechanical energy 703 to be converted into electrical energy 704.

Optionally, in the embodiments shown in FIG. 2 to FIG. 3 and FIG. 5 to FIG. 6, after the chemical energy of the hydrogen-containing combustible substance is converted into thermal energy, the methods for generating ship propulsion further include: continuing to convert the urea into the hydrogen-containing combustible substance by utilizing the thermal energy.

Optionally, after the hydrogen-containing combustible substance is combusted using the internal/external combustion engine to convert the chemical energy of the hydrogen-containing combustible substance into thermal energy, the thermal energy may not only be converted into other forms of energy to provide propulsion to the ship, but also be returned to the generation device to heat the urea in the generation device, which facilitates the occurrence of chemical reactions of the urea to convert and generate the hydrogen-containing combustible substance.

With the technical solutions of this embodiment of this application, the thermal energy generated in the system can be fully utilized to achieve a variety of functions, saving external heat required for converting urea into the hydrogen -containing combustible substance and improving the energy utilization efficiency of the entire propulsion system.

On the basis of the above embodiment shown in FIG. 2, FIG. 8 below is a schematic flowchart block diagram of another method 800 for generating ship propulsion according to an embodiment of this application.

As shown in FIG. 8, the method 800 for generating ship propulsion includes the following steps:
S810. Convert urea stored in a ship into ammonia;
S820. Combust the ammonia to convert chemical energy of the ammonia into thermal energy;
S830. Convert the thermal energy into electrical energy;
S840. Utilize the electrical energy to charge a power battery of the ship, the power battery being configured to provide propulsion for the ship; and
S850: Treat nitrogen oxides produced by combustion of the ammonia.

Optionally, in this embodiment of this application, steps S810 and S820 may be an implementation of steps S210 and S220 in the above embodiment shown in FIG. 2, that is, the hydrogen-containing combustible substance converted from the urea is ammonia, and the chemical energy of the ammonia is converted into thermal energy by combustion of the ammonia. For specific technical solution in steps S830 and S840, reference may be made to the relevant descriptions of steps S230 and S240 in the embodiment shown in FIG. 2, and details are not repeated herein.

In step S850, since ammonia contains nitrogen element, combustion of the ammonia produces nitrogen oxides (NOx), which can also pollute the atmospheric environment. Therefore, to reduce the pollutants generated during the driving of the ship, it is necessary to treat the nitrogen oxides to prevent them from entering the atmospheric environment.

Optionally, the nitrogen oxides may be physically treated, for example, by adsorption or absorption. Alternatively, the nitrogen oxides may be chemically treated, for example, by catalytic reduction treatment so that the nitrogen oxides react to generate harmless substances such as nitrogen gas and water.

In some implementations, the nitrogen oxides may be selectively catalytically reduced (Selective Catalytic Reduction Technology, SCR) using urea and/or ammonia.

Specifically, the SCR technology is a denitrification process in which an amino reductant (such as ammonia, urea, and liquid nitrogen) reacts with nitrogen oxides under the action of a catalyst to generate nitrogen gas and water. After combustion of the ammonia using the internal/external combustion engine, an SCR apparatus may be provided at an exhaust port of the internal/external combustion engine for the denitrification of the nitrogen oxides. For specific implementation of the SCR technology, reference may be made to descriptions in the related technology, and details are not described herein.

Optionally, in addition to the treatment of the nitrogen oxides produced by combustion of the ammonia, the combustion process of the ammonia may also be controlled to reduce the nitrogen oxides produced by combustion of the ammonia. In an example, the combustion of the ammonia may be controlled using rich-lean two-stage combustion technology (Rich-Lean Two Stage Combustion). The rich-lean two-stage combustion technology involves rich combustion in a first combustion zone to reduce the generation of nitrogen oxides and improve combustion stability, and using excess air in a second combustion zone to adjust the combustion temperature and ensure complete combustion.

With the technical solutions of this embodiment of this application, pollutants generated during the driving of the ship can be reduced, meeting the low-emission requirements for ship voyage. In addition, using the SCR technology for denitrification of nitrogen oxides provides good implementation effects and is easy to implement in ship systems.

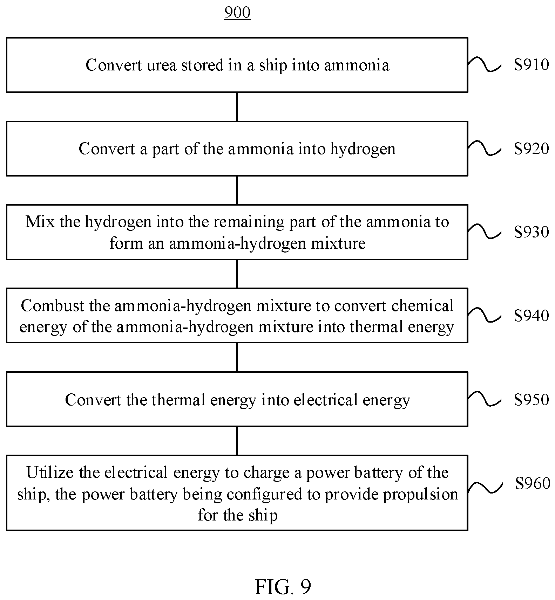

On the basis of the above embodiment shown in FIG. 2, FIG. 9 below is a schematic flowchart block diagram of another method 900 for generating ship propulsion according to an embodiment of this application.

As shown in FIG. 9, the method 900 for generating ship propulsion includes the following steps:
S910. Convert urea stored in a ship into ammonia;
S920. Convert a part of the ammonia into hydrogen;
S930. Mix the hydrogen into the remaining part of the ammonia to form an ammonia-hydrogen mixture;
S940. Combust the ammonia-hydrogen mixture to convert chemical energy of the ammonia-hydrogen mixture into thermal energy;
S950. Convert the thermal energy into electrical energy; and
S960. Utilize the electrical energy to charge a power battery of the ship, the power battery being configured to provide propulsion for the ship.

Optionally, in this embodiment of this application, steps S910 to S930 may be an implementation of step S210 in the above embodiment shown in FIG. 2, that is, the hydrogen-containing combustible substance converted from urea is an ammonia-hydrogen mixture.

Specifically, in step S910, urea may be converted into ammonia through hydrolysis or pyrolysis reactions. In step S920, the ammonia may be converted into hydrogen through pyrolysis reactions. In step S930, the hydrogen generated from the pyrolysis of ammonia may be mixed with unreacted ammonia to form an ammonia-hydrogen mixture.

In step S940, as compared to combusting ammonia alone, the ammonia-hydrogen mixture has stronger combustibility, which can improve the combustion stability and ignition performance of ammonia, thereby enhancing the conversion efficiency of the chemical energy of the ammonia-hydrogen mixture and improving fuel utilization.

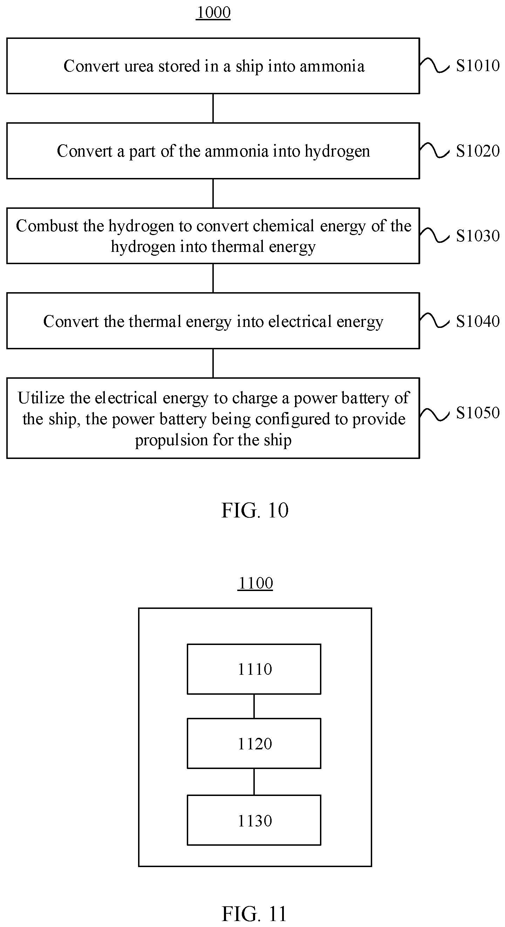

On the basis of the above embodiment shown in FIG. 2, FIG. 10 below is a schematic flowchart block diagram of another method 1000 for generating ship propulsion according to an embodiment of this application.

As shown in FIG. 10, the method 1000 for generating ship propulsion includes the following steps:
S1010. Convert urea stored in a ship into ammonia;
S1020. Convert the ammonia into hydrogen;
S1030. Combust the hydrogen to convert chemical energy of the hydrogen into thermal energy;
S1040. Convert the thermal energy into electrical energy; and
S1050. Utilize the electrical energy to charge a power battery of the ship, the power battery being configured to provide propulsion for the ship.

Optionally, in this embodiment of this application, steps S1010 and S1020 may be an implementation of step S210 in the above embodiment shown in FIG. 2, that is, the hydrogen-containing combustible substance converted from urea is hydrogen.

Specifically, in step S1010, urea may be converted into ammonia through hydrolysis or pyrolysis reactions. In step S1020, the ammonia may be completely converted into hydrogen through pyrolysis actions.

in step S1030, as compared to combusting ammonia or combusting the ammonia-hydrogen mixture, the product of hydrogen combustion is only water. Therefore, hydrogen can be used as a truly "zero" emission fuel, meeting the zero-emission requirements of the ship.

It should be noted that in the above embodiments shown in FIG. 8 to FIG. 10, after the chemical energy of ammonia, ammonia-hydrogen mixture, or hydrogen is converted into thermal energy, the thermal energy may be converted into electrical energy to charge the power battery. Alternatively, the thermal energy may be directly converted into mechanical energy to generate propulsion for driving the ship. Or, as in the above embodiments shown in FIG. 5 to FIG. 7, the thermal energy is not only converted into mechanical energy to generate the first propulsion for driving the ship but also converted into electrical energy to charge the power battery to generate the second propulsion for driving the ship.

Optionally, during voyage of the ship, the urea stored in a ship may be controlled for conversion into a hydrogen-containing combustible substance at different periods. For example, in the above embodiments, the urea stored in the ship may be controlled for conversion into the hydrogen-containing combustible substance within a first time period during voyage of the ship; and the conversion of the urea stored in the ship is controlled to stop within a second time period during voyage of the ship.

Optionally, the control device on the ship may be configured to control the conversion process of urea in the generation device. For example, within the first time period, the control device may input urea into the generation device, and the urea starts to be converted into the hydrogen-containing combustible substance; and within the second time period, the control device may stop inputting urea into the generation device, and the urea stops being converted. For another example, the control device may also control the reaction conditions of the generation device, so as to control the conversion of urea within the generation device and the termination of the conversion.

With the technical solutions of this embodiment of this application, the conversion of urea in the ship can be controlled accordingly based on periods of voyage of the ship, preventing the conversion process of urea from affecting a special period during voyage of the ship to ensure safety during voyage of the ship.

In an example, the foregoing first time period is an intermediate period during voyage of the ship, and the second time period is a departure period and/or a berthing preparation period during voyage of the ship.

Specifically, a voyage of the ship may be divided into an intermediate period, a departure period, and a berthing preparation period, where the intermediate period may be a period other than the departure period and the berthing preparation period during voyage. During the intermediate period of voyage of the ship, a distance between the ship and a port is greater than a preset distance, and the ship enters a stable waterway. Therefore, the voyage conditions of the ship are relatively stable and safe, and the urea may be converted during this period to generate propulsion for driving the ship. During the departure period and the berthing preparation period of voyage of the ship, the voyage conditions of the ship are prone to fluctuations, and at those periods, the ship is close to a port. If the conversion of urea is performed at these periods, the products generated by the entire system may pose health risks to the people at the port. Therefore, the conversion of urea may be stopped during these periods, which can ensure the voyage safety of the ship and reduce the influence of the ship on the people at the port.

Optionally, in the above embodiments of this application, urea may be synthesized from green ammonia and carbon dioxide.

Green ammonia may be produced by combining nitrogen gas from the air with green hydrogen. Green hydrogen may be produced by electrolyzers driven by renewable electricity to split water into hydrogen and oxygen. Using renewable electricity to produce ammonia will reduce carbon emissions in the ammonia manufacturing process.

With the technical solutions of this embodiment of this application, carbon emissions in the urea manufacturing process can be reduced, resulting in a carbon-free and environmentally friendly manufacturing process.

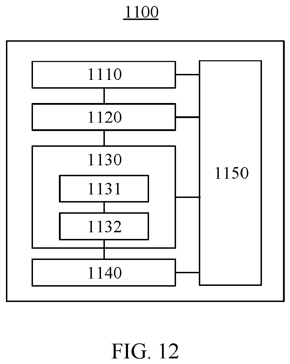

The above has introduced the method embodiments provided by the embodiments of this application with reference to FIG. 1 to FIG. 10. The following describes device embodiments provided by the embodiments of this application with reference to FIG. 11 and FIG. 12. It can be understood that the following device embodiments correspond to the above method embodiments, and for the following relevant technical solutions, reference may be made to the relevant descriptions of the above method embodiments. For brevity, the details are not elaborated herein.

FIG. 11 is a schematic structural block diagram of a ship 1100 according to an embodiment of this application.

As shown in FIG. 11, the ship 1100 includes: a storage device 1110, a generation device 1120, and a propulsion device 1130. Specifically, the storage device 1110 is configured to store urea; the generation device 1120 is configured to convert the urea into a hydrogen-containing combustible substance; and the propulsion device 1130 is configured to utilize chemical energy of the hydrogen-containing combustible substance to generate propulsion for driving the ship.

Optionally, in some implementations, the generation device 1120 may be the generation device 410 in the above embodiment shown in FIG. 4 or the generation device 710 in the above embodiment shown in FIG. 7. The propulsion device 1130 may include the internal/external combustion engine 420 and the generator 430 in the above embodiment shown in FIG. 4, or the internal/external combustion engine 720 and the generator 730 in the above embodiment shown in FIG. 7.

In some possible implementations, the hydrogen-containing combustible substance includes ammonia and/or hydrogen.

FIG. 12 is another schematic structural block diagram of a ship 1100 according to an embodiment of this application.

As shown in FIG. 12, the ship 1100 further includes a power battery 1140. In this case, the propulsion device 1130 may include a conversion apparatus 1131 and a charging apparatus 1132. The conversion apparatus 1131 is configured to convert chemical energy of the hydrogen-containing combustible substance into thermal energy and convert the thermal energy into electrical energy. The charging apparatus 1132 is configured to utilize the electrical energy to charge a power battery 1140 of the ship, the power battery 1140 being configured to provide propulsion for the ship.

Optionally, the conversion apparatus 1131 may be an internal/external combustion engine, for example, the internal/external combustion engine 420 in the above embodiment shown in FIG. 4 or the internal/external combustion engine 720 in the above embodiment shown in FIG. 7. The charging apparatus 1132 may be a generator, for example, the generator 430 in the above embodiment shown in FIG. 4 or the generator 730 in the above embodiment shown in FIG. 7.

As shown in FIG. 12, in some possible implementations, the ship 1100 further includes a control device 1150 configured to control an output power of the electrical energy from the conversion apparatus 1131 based on a state parameter of the power battery 1140, to control a charging speed at which the charging apparatus 1132 charges the power battery 1140.

Optionally, the control device 1150 may be the control device 450 in the above embodiment shown in FIG. 4 or the control device 750 in the above embodiment shown in FIG. 7.

In some possible implementations, the control device 1150 is configured to: control the output power of the electrical energy from the conversion apparatus 1131 to be a first power in a case that a SOC of the power battery 1140 is greater than a first preset value; and control the output power of the electrical energy from the conversion apparatus 1131 to be a second power in a case that the SOC of the power battery 1140 is less than or equal to the first preset value; where the first power is less than the second power.

In some possible implementations, the control device 1150 is configured to control the hydrogen-containing combustible substance and/or the urea in the generation device 1120 based on the state parameter of the power battery 1140 to control the output power of the electrical energy.

In some possible implementations, the control device 1150 is configured to: control, based on the state parameter of the power battery 1140, the conversion apparatus 1131 to control an amount of the chemical energy of the hydrogen-containing combustible substance to be converted into the thermal energy, controlling the output power of the electrical energy from the conversion apparatus 1131; and/or control, based on the state parameter of the power battery 1140, the conversion apparatus 1131 to control an amount of the thermal energy to be converted into the electrical energy, controlling the output power of the electrical energy from the conversion apparatus 1131.

In some possible implementations, the conversion apparatus 1131 is further configured to convert the thermal energy into mechanical energy, the mechanical energy being used to generate first propulsion for driving the ship 1100, and the power battery 1140 being configured to generate second propulsion for the ship 1100.

In some possible implementations, the control device 1150 is configured to control, based on the state parameter of the power battery 1140, the conversion apparatus 1131 to control an amount of the thermal energy to be converted into the mechanical energy and an amount of the thermal energy to be converted into the electrical energy.

In some possible implementations, the control device 1150 is configured to: control the conversion apparatus 1131 to convert a first part of the thermal energy into mechanical energy and convert a second part of the thermal energy into electrical energy in a case that the SOC of the power battery 1140 is greater than a second preset value; and control the conversion apparatus 1131 to convert a third part of the thermal energy into mechanical energy and convert a fourth part of the thermal energy into electrical energy in a case that the SOC of the power battery 1140 is less than or equal to the second preset value; where energy of the first part of the thermal energy is less than energy of the second part of the thermal energy, and energy of the third part of the thermal energy is greater than energy of the fourth part of the thermal energy.

In some possible implementations, the control device 1150 is configured to: control a first part of the hydrogen-containing combustible substance and/or a first part of the urea in the generation device 1120 based on the state parameter of the power battery 1140, the first part of the hydrogen-containing combustible substance being used to be converted into mechanical energy by the conversion apparatus 1131; and control a second part of the hydrogen-containing combustible substance and/or a second part of the urea in the generation device 1120 based on the state parameter of the power battery 1140, the second part of the hydrogen-containing combustible substance being used to be converted to electrical energy by the conversion apparatus 1131.

In some possible implementations, the control device 1150 is configured to: control the first part of the hydrogen-containing combustible substance in the generation device 1120 to be a first magnitude value and the second part of the hydro gen-containing combustible substance to be a second magnitude value in a case that the SOC of the power battery 1140 is greater than a third preset value; and control the first part of the hydrogen-containing combustible substance in the generation device 1120 to be a third magnitude value and the second part of the hydrogen-containing combustible substance to be a fourth magnitude value in a case that the SOC of the power battery 1140 is less than or equal to the third preset value; where the first magnitude value is less than the second magnitude value, and the third magnitude value is greater than the fourth magnitude value.

In some possible implementations, the control device 1150 is configured to control the amount of thermal energy to be converted into mechanical energy and the amount of thermal energy to be converted into electrical energy based on the propulsion demand of the ship 1100.

In some possible implementations, the generation device 1120 is further configured to continue to convert the urea into the hydrogen-containing combustible substance by utilizing the thermal energy.

In some possible implementations, the hydrogen-containing combustible substance includes ammonia; the conversion apparatus 1131 is configured to combust the ammonia to convert the chemical energy of the ammonia into thermal energy; and the ship 1100 further includes a treatment device configured to treat nitrogen oxides produced by combustion of the ammonia.

In some possible implementations, the treatment device is configured to selectively catalytically reduce the nitrogen oxides by utilizing the urea and/or the ammonia.

In some possible implementations, the hydrogen-containing combustible substance includes an ammonia-hydrogen mixture; the generation device 1120 is configured to: convert the urea into ammonia, convert a part of the ammonia into hydro gen, and mix the hydrogen into the remaining part of the ammonia to form the ammonia-hydrogen mixture; and the conversion apparatus 1131 is configured to combust the ammonia-hydrogen mixture to convert chemical energy of the ammonia-hydrogen mixture into thermal energy.

In some possible implementations, the hydrogen-containing combustible substance includes hydrogen; the generation device 1120 is configured to convert the urea into ammonia and convert the ammonia into hydrogen; and the conversion apparatus 1131 is configured to combust the hydrogen to convert the chemical energy of the hydrogen into thermal energy.

In some possible implementations, the generation device 1120 is configured to: generate the hydrogen-containing combustible substance from the urea within a first time period during voyage of the ship 1100; and control the generation of the hydrogen-containing combustible substance from the urea to stop within a second time period during voyage of the ship 1100.

In some possible implementations, the first time period is an intermediate period during voyage of the ship 1100, and the second time period is a departure period and/or a berthing preparation period during voyage of the ship 1100.

In some possible implementations, the urea is synthesized from green ammonia and carbon dioxide.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A method for generating ship propulsion, **characterized by** comprising:
converting urea stored in a ship into a hydrogen-containing combustible substance; and
utilizing chemical energy of the hydrogen-containing combustible substance to generate propulsion for driving the ship.

2. The method according to claim 1, **characterized in that** the hydrogen-containing combustible substance comprises ammonia and/or hydrogen.

3. The method according to claim 1 or 2, **characterized in that** the utilizing chemical energy of the hydrogen-containing combustible substance to generate propulsion for driving the ship comprises:
converting the chemical energy of the hydrogen-containing combustible substance into thermal energy;
converting the thermal energy into electrical energy; and
utilizing the electrical energy to charge a power battery of the ship, the power battery being configured to provide propulsion for the ship.

4. The method according to claim 3, **characterized in that** the utilizing the electrical energy to charge a power battery of the ship comprises:
controlling an output power of the electrical energy based on a state parameter of the power battery to control a charging speed at which the power battery is charged.

5. The method according to claim 4, **characterized in that** the controlling an output power of the electrical energy based on a state parameter of the power battery comprises:
controlling the output power of the electrical energy to be a first power in a case that a state of charge SOC of the power battery is greater than a first preset value; and
controlling the output power of the electrical energy to be a second power in a case that the SOC of the power battery is les s than or equal to the first preset value;
wherein the first power is less than the second power.

6. The method according to claim 4 or 5, **characterized in that** the controlling an output power of the electrical energy based on a state parameter of the power battery comprises:
controlling the hydrogen-containing combustible substance and/or the urea based on the state parameter of the power battery to control the output power of the electrical energy.

7. The method according to any one of claims 4 to 6, **characterized in that** the controlling an output power of the electrical energy based on a state parameter of the power battery comprises:
controlling, based on the state parameter of the power battery, an amount of the chemical energy of the hydrogen-containing combustible substance to be converted into the thermal energy and/or an amount of the thermal energy to be converted into the electrical energy to control the output power of the electrical energy.

8. The method according to any one of claims 3 to 7, **characterized in that** the method further comprises:
converting the thermal energy into mechanical energy; and
utilizing the mechanical energy to generate first propulsion for driving the ship, the power battery being configured to generate second propulsion for the ship.

9. The method according to claim 8, **characterized in that** the converting the thermal energy into mechanical energy and converting the thermal energy into electrical energy comprise:
controlling, based on the state parameter of the power battery, an amount of the thermal energy to be converted into the mechanical energy and an amount of the thermal energy to be converted into the electrical energy.

10. The method according to claim 9, **characterized in that** the controlling, based on the state parameter of the power battery, an amount of the thermal energy to be converted into the mechanical energy and an amount of the thermal energy to be converted into the electrical energy comprises:
controlling conversion of a first part of the thermal energy into mechanical energy and conversion of a second part of the thermal energy into electrical energy in a case that the SOC of the power battery is greater than a second preset value; and
controlling conversion of a third part of the thermal energy into mechanical energy and conversion of a fourth part of the thermal energy into electrical energy in a case that the SOC of the power battery is less than or equal to the second preset value;
wherein energy of the first part of the thermal energy is greater than energy of the second part of the thermal energy, and energy of the third part of the thermal energy is less than energy of the fourth part of the thermal energy.

11. The method according to any one of claims 8 to 10, **characterized in that** the converting the thermal energy into mechanical energy and converting the thermal energy into electrical energy comprise:
controlling a first part of the hydrogen-containing combustible substance and/or a first part of the urea based on the state parameter of the power battery;
converting thermal energy corresponding to the first part of the hydrogen-containing combustible substance and/or the first part of the urea into the mechanical energy;
controlling a second part of the hydrogen-containing combustible substance and/or a second part of the urea based on the state parameter of the power battery; and
converting thermal energy corresponding to the second part of the hydrogen-containing combustible substance and/or the second part of the urea into the electrical energy.

12. The method according to claim 11, **characterized in that** the controlling a first part of the hydrogen-containing combustible substance based on the state parameter of the power battery and controlling a second part of the hydrogen-containing combustible substance based on the state parameter of the power battery comprise:
controlling the first part of the hydrogen-containing combustible substance to be a first magnitude value and the second part of the hydrogen-containing combustible substance to be a second magnitude value in a case that the SOC of the power battery is greater than a third preset value; and
controlling the first part of the hydrogen-containing combustible substance to be a third magnitude value and the second part of the hydrogen-containing combustible substance to be a fourth magnitude value in a case that the SOC of the power battery is less than or equal to the third preset value;
wherein the first magnitude value is greater than the second magnitude value, and the third magnitude value is less than the fourth magnitude value.

13. The method according to any one of claims 8 to 12, **characterized in that** the converting the thermal energy into mechanical energy and converting the thermal energy into electrical energy comprise:
controlling, based on a propulsion demand of the ship, an amount of the thermal energy to be converted into the mechanical energy and an amount of the thermal energy to be converted into the electrical energy.

14. The method according to any one of claims 3 to 13, **characterized in that** after the converting the chemical energy of the hydrogen-containing combustible substance into thermal energy, the method further comprises:
continuing to convert the urea into the hydrogen-containing combustible substance by utilizing the thermal energy.

15. The method according to any one of claims 3 to 14, **characterized in that** the hydrogen-containing combustible substance comprises ammonia;
wherein the converting the chemical energy of the hydrogen-containing combustible substance into thermal energy comprises:
combusting the ammonia to convert chemical energy of the ammonia into thermal energy; and
the method further comprises: treating nitrogen oxides produced by combustion of the ammonia.

16. The method according to claim 15, **characterized in that** the treating nitrogen oxides produced by combustion of the ammonia comprises:
selectively catalytically reducing the nitrogen oxides by utilizing the urea and/or the ammonia.

17. The method according to any one of claims 3 to 16, **characterized in that** the hydrogen-containing combustible substance comprises an ammonia-hydrogen mixture;
wherein the converting urea stored in a ship into a hydrogen-containing combustible substance comprises:
converting the urea into ammonia;
converting a part of the ammonia into hydrogen; and
mixing the hydrogen into the remaining part of the ammonia to form the ammonia-hydrogen mixture; and
the converting the chemical energy of the hydrogen-containing combustible substance into thermal energy comprises:
combusting the ammonia-hydrogen mixture to convert chemical energy of the ammonia-hydrogen mixture into thermal energy.

18. The method according to any one of claims 3 to 17, **characterized in that** the hydrogen-containing combustible substance comprises hydrogen;
wherein the converting urea stored in a ship into a hydrogen-containing combustible substance comprises:
converting the urea into ammonia;
converting the ammonia into hydrogen; and
the converting the chemical energy of the hydrogen-containing combustible substance into thermal energy comprises:
combusting the hydrogen to convert chemical energy of the hydrogen into thermal energy.

19. The method according to any one of claims 1 to 18, **characterized in that** the converting urea stored in a ship into a hydrogen-containing combustible substance comprises:
controlling conversion of the urea stored in the ship into the hydrogen-containing combustible substance within a first time period during voyage of the ship; and
the method further comprises controlling to stop conversion of the urea stored in the ship within a second time period during voyage of the ship.

20. The method according to claim 19, **characterized in that** the first time period is an intermediate period during voyage of the ship, and the second time period is a departure period and/or a berthing preparation period during voyage of the ship.

21. The method according to any one of claims 1 to 20, **characterized in that** the urea is synthesized from green ammonia and carbon dioxide.

22. A ship, **characterized by** comprising:
a storage device configured to store urea;
a generation device configured to convert the urea into a hydrogen-containing combustible substance; and
a propulsion device configured to utilize chemical energy of the hydrogen-containing combustible substance to generate propulsion for driving the ship.

23. The ship according to claim 22, **characterized in that** the hydrogen-containing combustible substance comprises ammonia and/or hydrogen.

24. The ship according to claim 22 or 23, **characterized in that** the ship further comprises a power battery; and
the propulsion device comprises a conversion apparatus configured to convert the chemical energy of the hydrogen-containing combustible substance into thermal energy and convert the thermal energy into electrical energy; and
a charging apparatus configured to utilize the electrical energy to charge the power battery, the power battery being configured to provide propulsion for the ship.

25. The ship according to claim 24, **characterized in that** the ship further comprises a control device configured to control an output power of the electrical energy from the conversion apparatus based on a state parameter of the power battery to control a charging speed at which the charging apparatus charges the power battery.

26. The ship according to claim 25, **characterized in that** the control device is configured to: control the output power of the electrical energy from the conversion apparatus to be a first power in a case that a SOC of the power battery is greater than a first preset value; and
control the output power of the electrical energy from the conversion apparatus to be a second power in a case that the SOC of the power battery is less than or equal to the first preset value;
wherein the first power is less than the second power.

27. The ship according to claim 25 or 26, **characterized in that** the control device is configured to control the hydrogen-containing combustible substance and/or the urea in the generation device based on the state parameter of the power battery to control the output power of the electrical energy.

28. The ship according to any one of claims 25 to 27, **characterized in that** the control device is configured to:
control, based on the state parameter of the power battery, the conversion apparatus to control an amount of the chemical energy of the hydrogen-containing combustible substance to be converted into the thermal energy, controlling the output power of the electrical energy from the conversion apparatus; and/or
control, based on the state parameter of the power battery, the conversion apparatus to control an amount of the thermal energy to be converted into the electrical energy, controlling the output power of the electrical energy from the conversion apparatus.

29. The ship according to any one of claims 24 to 28, **characterized in that** the conversion apparatus is further configured to convert the thermal energy into mechanical energy, the mechanical energy being used to generate first propulsion for driving the ship, and the power battery being configured to generate second propulsion for the ship.

30. The ship according to claim 29, **characterized in that** the control device is configured to control, based on the state parameter of the power battery, the conversion apparatus to control an amount of the thermal energy to be converted into the mechanical energy and an amount of the thermal energy to be converted into the electrical energy.

31. The ship according to claim 30, **characterized in that** the control device is configured to: control the conversion apparatus to convert a first part of the thermal energy into mechanical energy and convert a second part of the thermal energy into electrical energy in a case that the SOC of the power battery is greater than a second preset value; and
control the conversion apparatus to convert a third part of the thermal energy into mechanical energy and convert a fourth part of the thermal energy into electrical energy in a case that the SOC of the power battery is less than or equal to the second preset value;
wherein energy of the first part of the thermal energy is less than energy of the second part of the thermal energy, and energy of the third part of the thermal energy is greater than energy of the fourth part of the thermal energy.

32. The ship according to any one of claims 29 to 31, **characterized in that** the control device is configured to:
control a first part of the hydrogen-containing combustible substance and/or a first part of the urea in the generation device based on the state parameter of the power battery, the first part of the hydrogen-containing combustible substance being used to be converted into mechanical energy by the conversion apparatus; and
control a second part of the hydrogen-containing combustible substance and/or a second part of the urea in the generation device based on the state parameter of the power battery, the second part of the hydrogen-containing combustible substance being used to be converted to electrical energy by the conversion apparatus.

33. The ship according to claim 32, **characterized in that** the control device is configured to: control the first part of the hydrogen-containing combustible substance in the generation device to be a first magnitude value and the second part of the hydrogen-containing combustible substance to be a second magnitude value in a case that the SOC of the power battery is greater than a third preset value; and
control the first part of the hydrogen-containing combustible substance in the generation device to be a third magnitude value and the second part of the hydrogen-containing combustible substance to be a fourth magnitude value in a case that the SOC of the power battery is less than or equal to the third preset value;
wherein the first magnitude value is less than the second magnitude value, and the third magnitude value is greater than the fourth magnitude value.

34. The ship according to any one of claims 29 to 33, **characterized in that** the control device is configured to control, based on a propulsion demand of the ship, the conversion apparatus to control an amount of the thermal energy to be converted into the mechanical energy and an amount of the thermal energy to be converted into the electrical energy.

35. The ship according to any one of claims 24 to 34, **characterized in that** the generation device is further configured to continue to convert the urea into the hydrogen-containing combustible substance by utilizing the thermal energy.

36. The ship according to any one of claims 24 to 35, **characterized in that** the hydrogen-containing combustible substance comprises ammonia; the conversion apparatus is configured to combust the ammonia to convert chemical energy of the ammonia into thermal energy; and
the ship further comprises a treatment device configured to treat nitrogen oxides produced by combustion of the ammonia.

37. The ship according to claim 36, **characterized in that** the treatment device is configured to selectively catalytically reduce the nitrogen oxides by utilizing the urea and/or the ammonia.

38. The ship according to any one of claims 24 to 37, **characterized in that** the hydrogen-containing combustible substance comprises an ammonia-hydrogen mixture;
the generation device is configured to convert the urea into ammonia, convert a part of the ammonia into hydrogen, and mix the hydrogen into the remaining part of the ammonia to form the ammonia-hydrogen mixture; and
the conversion apparatus is configured to combust the ammonia-hydrogen mixture to convert chemical energy of the ammonia-hydrogen mixture into thermal energy.

39. The ship according to any one of claims 24 to 38, **characterized in that** the hydrogen-containing combustible substance comprises hydrogen;
the generation device is configured to convert the urea into ammonia and convert the ammonia into hydrogen; and
the conversion apparatus is configured to combust the hydrogen to convert chemical energy of the hydrogen into thermal energy.

40. The ship according to any one of claims 22 to 39, **characterized in that** the generation device is configured to:
generate the hydrogen-containing combustible substance from the urea within a first time period during voyage of the ship; and
control the generation of the hydrogen-containing combustible substance from the urea to stop within a second time period during voyage of the ship.

41. The ship according to claim 40, **characterized in that** the first time period is an intermediate period during voyage of the ship, and the second time period is a departure period and/or a berthing preparation period during navigation of the ship.

42. The ship according to any one of claims 22 to 41, **characterized in that** the urea is synthesized from green ammonia and carbon dioxide.
